# EUROPÄISCHE PATENTSCHRIFT

(11) **EP 3 374 188 B1**
(45) Veröffentlichungstag und Bekanntmachung des Hinweises auf die Patenterteilung: **10.03.2021**
(21) Anmeldenummer: 16795310.8
(22) Anmeldetag: 11.11.2016
(51) Int. Cl.: B41J 3/407, B41J 11/00, B41J 11/06

(54) **VERFAHREN ZUR EINGABE VON DRUCKDATEN FÜR DIE BEDRUCKUNG EINES BEDRUCKUNGSOBJEKTS MIT EINEM DRUCKER UND DRUCKER ZUR DURCHFÜHRUNG DES VERFAHRENS**
METHOD FOR INPUTTING PRINT DATA FOR PRINTING ON A PRINT OBJECT BY MEANS OF A PRINTER, AND PRINTER FOR PERFORMING THE METHOD
PROCÉDÉ DE SAISIE DE DONNÉES D'IMPRESSION POUR L'IMPRESSION D'UN OBJET À IMPRIMER AU MOYEN D'UNE IMPRIMANTE, ET IMPRIMANTE POUR LA MISE EN OEUVRE DUDIT PROCÉDÉ

(30) Priorität: 13.11.2015 DE 102015119642
(43) Veröffentlichungstag der Anmeldung: 19.09.2018
(73) Patentinhaber: Phoenix Contact GmbH & Co. KG, 32825 Blomberg (DE)
(72) Erfinder: ISAAK, Peter, 32758 Detmold (DE); SCHIERHOLZ, Albrecht, 32816 Schieder-Schwalenberg (DE)
(74) Vertreter: Gesthuysen Patentanwälte
(86) Internationale Anmeldenummer: PCT/EP2016/077410
(87) Internationale Veröffentlichungsnummer: WO 2017/081236

(56) Entgegenhaltungen:
- DE-A1-102007 036 374

## Beschreibung

Die Erfindung betrifft ein Verfahren zur Eingabe von Druckdaten für die Bedruckung eines Bedruckungsobjekts mit einem Drucker, wobei der Drucker ein Gehäuse mit einem innerhalb des Gehäuses ausgebildeten Druckraum, eine Druckvorrichtung, eine Aufnahmevorrichtung für ein der Aufnahme des zu bedruckenden Bedruckungsobjekts dienendes auswechselbares Magazin (), eine Steuer- und Auswerteeinheit, einen Speicher und eine Eingabe- und Anzeigeeinrichtung aufweist. Daneben betrifft die Erfindung noch einen entsprechenden Drucker zur Durchführung des Verfahrens.

In der industriellen und gewerblichen Praxis werden zur Kennzeichnung und Beschriftung von Maschinen, Geräten, Klemmen, Kabeln oder Leitern unterschiedliche Arten von Kennzeichnungs- und Markierungsschildern verwendet, auf denen Informationen bezüglich der Bauteile, denen sie zugeordnet werden, aufgebracht sind. Hierzu werden die Kennzeichnungs- oder Markierungsschilder üblicherweise in einem Drucker mit einem entsprechenden Druckmuster, in der Regel alphanumerischen Zeichen, versehen. Für die Markierung werden unterschiedliche Drucker mit unterschiedlichen Druckverfahren verwendet, beispielsweise Tintenstrahldrucker, Thermotransferdruckers oder UV-Drucker. Derartige Markierungsdrucker sind beispielsweise aus dem Katalog "Markierungssysteme Werkzeuge Montagematerial, 2013 /2014", Seiten 28 bis 37 der Phoenix Contact GmbH & Co. KG bekannt.

In der Praxis werden häufig Bedruckungsobjekte in Kartenformat verwendet, die eine Mehrzahl von einzelnen Markierungsschildern aufweisen. Die Bedruckungsobjekte, die häufig auch als Marker bezeichnet werden, sind dabei insbesondere als Kunststoffspritzteile oder als Kunststoffstanzteile ausgebildet. Bei Kunststoffspritzteilen, die auch als Universal Card Material (UniCard oder UC-Material) bezeichnet werden, sind die Markierungsschilder über Stege in einem äußeren Rahmen befestigt. Nach dem Bedrucken können die einzelnen Markierungsschilder, die häufig zur Leiter- und Kabelmarkierung oder zur Klemmenmarkierung verwendet werden, vom Rahmen abgetrennt werden.

Bei Kunststoffstanzteilen, die auch als Universal Sheet Material (UniSheet oder US-Material) bezeichnet werden, bilden mehrere Reihen von Markierungsschildern zusammen einen Marker, wobei nach dem Bedrucken des US Materials die einzelnen Markierungsschilder voneinander getrennt werden können.

Darüber hinaus können mehrere Kennzeichnung- oder Markierungsschilder auch auf einem gemeinsamen Trägerbogen aufgebracht, insbesondere aufgeklebt werden, von dem die einzelnen Kennzeichnungs- oder Markierungsschilder nach der Markierung einfach abgezogen werden können. Derartige Trägerbögen werden in der Praxis häufig auch als Beschriftungsbögen oder Etikettenbögen bezeichnet.

Nachfolgend werden die unterschiedlichen Arten von Markern allgemein als Bedruckungsobjekte bezeichnet, wobei die Bedruckungsobjekte aus unterschiedlichen Materialien, insbesondere unterschiedlichen Kunststoffen, bestehen und unterschiedliche Abmessungen, insbesondere unterschiedlichen Materialstärken aufweisen können. Um die unterschiedlichen Bedruckungsobjekte mit ihren unterschiedlichen Abmessungen von einem Drucker bedrucken zu können, werden die einzelnen Bedruckungsobjekte bei dem vorliegenden Verfahren bzw. dem in Rede stehenden Drucker in ein für das Bedruckungsobjekt passendes Magazin eingelegt bzw. eingesetzt. In der Regel können dabei mehrere Bedruckungsobjekte jeweils einzeln in ein Magazin eingelegt werden, so dass die Anzahl der Bedruckungsobjekte größer als die Anzahl der Magazine ist. Wenn alle Magazine die gleichen Außenabmessungen aufweisen, kann jedes Magazin in die Aufnahmevorrichtung des Druckers eingesetzt werden, die nach Art einer Schublade zwischen einer Be- und Entladeposition außerhalb des Druckraums und einer Druckposition innerhalb des Druckraums verfahren werden kann.

Zum Bedrucken derartiger Bedruckungsobjekte haben sich Thermotransferdrucker als besonders geeignet herausgestellt. Beim Thermotransferdruck wird eine spezielle, mit temperaturempfindlicher Farbe beschichtete Folie zwischen dem Bedruckungsobjekt und einem Thermodruckkopf als Druckvorrichtung hindurchgeführt, wobei die Folie als Farbband in einer entsprechenden Druckerkassette angeordnet ist. Mit dem Thermotransferdruck lassen sich ein exakter Farbaufdruck und eine hohe Druckqualität bei einem hohen Oberflächenglanz erzeugen. Hierfür ist es allerdings erforderlich, dass die Druckparameter, wie Temperatur, Druckgeschwindigkeit, Material und Dicke des Bedruckungsobjekts sowie des Farbbandes aufeinander abgestimmt sind.

Bei dem in Rede stehenden Drucker, bei dem es sich vorzugsweise um einen Thermotransferdrucker handelt, soll eine Vielzahl von unterschiedlichen Bedruckungsobjekten bedruckt werden können. Für den Drucker gibt es dann eine Mehrzahl von unterschiedlichen Magazinen, die jeweils in die Aufnahmevorrichtung eingesetzt werden können. Darüber hinaus können auch noch mehrere unterschiedliche Druckerkassetten mit unterschiedlichen Farbbändern verwendet werden. Daher muss der Benutzer bei der Auswahl der einzelnen Komponenten sehr sorgfältig sein, da ansonsten trotz entsprechender Beschriftung der einzelnen Komponenten die Gefahr besteht, dass den Drucker mit Komponenten verwendet wird, die nicht entsprechend aufeinander abgestimmt sind.

Aus der DE 10 2010 037 564 A1 ist ein Bedruckungsobjekt für einen Thermotransferdrucker bekannt, bei dem das Bedruckungsobjekt als Kennzeichnung eine Strichcode-Kennzeichnung mit einer Mehrzahl von hintereinander angeordneten Einzelstrichen aufweist, wobei die Kennzeichnung von einem im Drucker angeordneten optischen Sensor erfasst wird. Bei Verwendung der aus der DE 10 2010 037 564 A1 bekannten Bedruckungsobjekte kann somit sichergestellt werden, dass der eigentliche Druckvorgang nur dann ausgeführt wird, wenn der Benutzer das richtige Bedruckungsobjekt in den Drucker eingelegt hat.

Das Dokument DE 10 2007 036 374 A1 offenbart eine Markiervorrichtung zur Markierung wenigstens eines Markierobjekts. Sie weist wenigstens eine Markiereinheit und wenigstens eine Markierobjekthalterung auf, wobei die Markiereinheit und die Markierobjekthalterung in einer Haupttransportrichtung relativ zueinander bewegbar sind und das Markierobjekt wenigstens einen Objektträger und wenigstens einen von dem Objektträger gehaltenen Objektnutzen aufweist und wobei der Objektträger wenigstens ein Identifikationsmittel umfasst.

Ist der Drucker als Desktop-Drucker ausgebildet, was bei den aus der Praxis bekannten Thermotransferdruckern zur Bedruckung von Bedruckungsobjekten in Kartenformat meistens der Fall ist, so erfolgt die Eingabe der Druckparameter sowie der der eigentlichen Beschriftung des Bedruckungsobjekts dienenden Druckdaten mit Hilfe spezieller Software, wobei die Eingabe an externen Rechnern mit Hilfe grafischer Benutzeroberflächen erfolgt. Diese Art der Eingabe von Druckdaten ist für den Benutzer sehr komfortabel, zumal die Druckparameter und Druckdaten häufig bereits durch entsprechende Softwarepakete zur Verfügung gestellt werden. Auch die manuelle Erstellung von einzelnen Druckdaten für bestimmte Bedruckungsobjekte ist an externen Rechnern mit üblichen Tastaturen und entsprechend großen Bildschirmen sowie dank der Verwendung einer entsprechenden grafischen Eingabesoftware relativ komfortabel.

Beim mobilen Einsatz von portablen Druckern erfolgt die Eingabe der Druckparameter und der Druckdaten dagegen mit Hilfe der am Drucker vorgesehenen Eingabe- und Anzeigeeinrichtung, die nur relativ begrenzte Abmessungen und häufig auch nur wenige Funktionstasten aufweisen. Auch hierbei kann die Eingabe der Druckparameter und Druckdaten durch entsprechende Software unterstützt werden, indem dem Benutzer entsprechende Menüpunkte und Auswahlfilter angezeigt bzw. vorgeschlagen werden. Wenn der Drucker jedoch dafür ausgelegt sein soll, eine Vielzahl von unterschiedlichen Bedruckungsobjekten bedrucken zu können, so muss der Benutzer zunächst über mehrere Filter und Menüpunkte das zu bedruckende Bedruckungsobjekt auswählen, bevor er mit der Eingabe der Druckdaten in die für das Bedruckungsobjekt vorgesehene Eingabemaske, die häufig auch als Druckvorlage bezeichnet wird, beginnen kann. Der Zeitaufwand bei der Auswahl der Eingabemaske und die Gefahr der Wahl einer falschen Eingabemaske und somit von fehlerhaften Eingaben steigt dabei in dem Maße, in dem auch die Anzahl der Bedruckungsobjekte zunimmt, die von dem Drucker bedruckt werden können.

Der vorliegenden Erfindung liegt daher die Aufgabe zugrunde, bei einem eingangs beschrieben Verfahren die Eingabe von Druckdaten für die Bedruckung eines Bedruckungsobjekts mit einem Drucker, insbesondere einem Thermotransferdrucker, zu vereinfachen. Es soll auch bei einem portablen Drucker die Eingabe der Druckdaten durch den Benutzer vor Ort komfortabel und einfach möglich sein. Darüber hinaus liegt der Erfindung die Aufgabe zugrunde, einen entsprechenden Drucker zur Durchführung des Verfahrens zur Verfügung zu stellen.

Diese Aufgabe ist bei dem erfindungsgemäßen Verfahren mit den Merkmalen des Patentanspruchs 1 gelöst. Erfindungsgemäß weist das Verfahren dabei zunächst folgende Schritte auf:
- Einsetzen eines Magazins mit dem zu bedruckenden Bedruckungsobjekt in die Aufnahmevorrichtung, wobei sich die Aufnahmevorrichtung in einer Be- und Entladeposition außerhalb des Druckraums befindet.
- Einfahren der Aufnahmevorrichtung in den Druckraum, wobei mindestens ein im Gehäuse angeordneter optischer Sensor eine am Bedruckungsobjekt angeordnete Kennzeichnung und/oder mindestens ein im Gehäuse angeordneter optischer Sensor eine am Magazin angeordnete Kennzeichnung erfasst.
- Auswahl einer geeigneten Eingabemaske aus einer Mehrzahl von im Speicher gespeicherten Eingabemasken durch die Steuer- und Auswerteeinheit anhand der vom Sensor erfassten Kennzeichnung des eingesetzten Bedruckungsobjekts oder Auswahl einzelner Eingabemasken aus der Mehrzahl von im Speicher gespeicherten Eingabemasken durch die Steuer- und Auswerteeinheit anhand der vom Sensor erfassten Kennzeichnung des eingesetzten Magazins.
- Anzeige der ausgewählten Eingabemaske oder der ausgewählten Eingabemasken auf der Eingabe- und Anzeigeeinrichtung.

Bei dem erfindungsgemäßen Verfahren wird somit die unter Umständen sehr zeitaufwändige und fehleranfällige Auswahl des zu bedruckenden Bedruckungsobjekts über die am Drucker vorgesehene Eingabe- und Anzeigeeinrichtung dadurch zumindest vereinfacht oder sogar vollständig ersetzt, dass beim Einfahren der Aufnahmevorrichtung mit dem eingesetzten Magazin und dem zu bedruckenden Bedruckungsobjekt in den Druckraum automatisch erkannt wird, welches Bedruckungsobjekt und/oder welches Magazin der Benutzer ausgewählt hat. Die automatische Erkennung des eingesetzten Bedruckungsobjekts und/oder des verwendeten Magazins wird dann von der Steuer- und Auswerteeinheit dazu genutzt, entsprechende Eingabemasken aus der Mehrzahl von Eingabemasken, die im Speicher abgelegt sind, auszuwählen und auf der Eingabe- und Anzeigeeinrichtung anzuzeigen. Im Speicher des Druckers sind dazu alle Eingabemasken der Bedruckungsobjekte, die von dem Drucker bedruckt werden können, in einer entsprechenden Tabelle abgelegt.

Wird durch einen im Gehäuse angeordneten optischen Sensor eine am Magazin angeordnete Kennzeichnung erfasst, die einem dem Magazin zugeordneten Code entspricht, so kann die Steuer- und Auswerteeinheit anhand der erfassten Kennzeichnung bzw. des entsprechenden Codes ermitteln, welches Magazin in der Aufnahmevorrichtung aktuell eingelegt ist und dann die diesem Magazin zugeordneten Eingabemasken auswählen. Da in einem Magazin nur eine kleine Anzahl der insgesamt von dem Drucker bedruckbaren Bedruckungsobjekte eingelegt werden kann, ist über die Erkennung des eingelegten Magazins eine Auswahl der Eingabemasken möglich, die zu den entsprechenden Bedruckungsobjekten passen, die in dem Magazin eingelegt sein können.

Ist ein Drucker beispielsweise dazu ausgelegt, 200 verschiedene Bedruckungsobjekte zu bedrucken, wozu beispielsweise 40 verschiedene Magazine zur Aufnahme der einzelnen Bedruckungsobjekte vorgesehen sind, so kann durch die zuvor beschriebene Erkennung des eingelegten Magazins die Anzahl der möglichen Eingabemasken entsprechend reduziert werden, so dass eine Art Vorauswahl stattfindet. Im Anschluss daran muss der Benutzer nur noch aus der entsprechend reduzierten Anzahl von möglichen Eingabemasken, die auf der Eingabe- und Anzeigeeinrichtung angezeigt werden, die für das tatsächlich eingelegte Bedruckungsobjekt vorgesehene Eingabemaske auswählen. Der Benutzer muss somit nicht mehr unter 200 möglichen Eingabemasken sondern beispielsweise nur noch unter 5 Eingabemasken auswählen. Hierdurch ist eine deutliche Reduzierung des Zeitaufwands bei der Auswahl der richtigen Eingabemaske und auch eine Reduzierung des Risikos der Auswahl einer falschen Eingabemaske erreichbar.

Wird beim Einfahren der Aufnahmevorrichtung in den Druckraum durch einen entsprechenden optischen Sensor eine an dem eingelegten Bedruckungsobjekt angeordnete Kennzeichnung erfasst, die einem dem Bedruckungsobjekt zugeordneten Code entspricht, so kann die Steuer- und Auswerteeinheit aus der Menge der im Speicher gespeicherten Eingabemasken direkt diejenige auswählen, die für das eingelegte - und erfasste - Bedruckungsobjekt vorgesehen ist. Nach dem Anzeigen der so ausgewählten Eingabemaske kann der Benutzer dann direkt mit der Eingabe der Druckdaten in die Eingabemaske mittels der Eingabe- und Anzeigeeinrichtung beginnen.

Das Einfahren der Aufnahmevorrichtung in den Druckraum wird vorzugsweise dadurch gestartet, dass der Benutzer einen entsprechenden Knopf oder eine entsprechende Taste drückt, wenn er das Magazin mit dem Bedruckungsobjekt in die Aufnahmevorrichtung eingelegt hat.

Durch die Verwendung mindestens eines optischen Sensors, insbesondere eines Reflexlicht-Tasters, kann dabei auf einfache und kostengünstige Art und Weise eine an dem Bedruckungsobjekt oder an dem Magazin angeordnete Kennzeichnung erfasst werden. Bei der Kennzeichnung handelt es sich vorzugsweise um eine Strichcode-Kennzeichnung, bestehend aus mehreren Einzelstrichen. Ist die Erstreckung der Kennzeichnung parallel zur Bewegungsrichtung der Aufnahmevorrichtung angeordnet, so ist zur Erfassung einer derartigen Strichcode-Kennzeichnung ein einziger, fest im Gehäuse angeordneter optischer Sensor ausreichend, da dann beim Einfahren der Aufnahmevorrichtung in den Druckraum die Strichcode-Kennzeichnung an dem optischen Sensor vorbeibewegt wird.

Gemäß einer vorteilhaften Ausgestaltung des erfindungsgemäßen Verfahrens erfolgt sowohl eine Erfassung einer am Bedruckungsobjekt angeordneten Kennzeichnung als auch eine Erfassung einer am Magazin angeordneten Kennzeichnung. Vorzugsweise sind dazu im Gehäuse des Druckers mindestens ein optischer Sensor zur Erfassung der Kennzeichnung am Bedruckungsobjekt und mindestens ein optischer Sensor zur Erfassung der Kennzeichnung am Magazin angeordnet. Grundsätzlich kann jedoch auch ein optischer Sensor dazu verwendet werden, sowohl die Kennzeichnung am Bedruckungsobjekt als auch die Kennzeichnung am Magazin zu erfassen. Werden beim Einfahren der Aufnahmevorrichtung in den Druckraum sowohl die Kennzeichnung des Bedruckungsobjekts als auch die Kennzeichnung des Magazins erfasst, so führt dies zunächst dazu, dass damit eine zumindest teilweise redundante Information bezüglich einer geeigneten Eingabemaske vorliegt, die von der Steuer- und Auswerteeinheit zur Fehlererkennung genutzt werden kann.

Vorzugsweise wird die Erfassung der Kennzeichnung des eingelegten Bedruckungsobjekts und des eingesetzten Magazins nicht nur zur Auswahl der richtigen Eingabemaske sondern auch zur Absicherung des Druckprozesses genutzt. Dadurch wird verhindert, dass ein Bedruckungsobjekt bedruckt wird, obwohl die vom dem Benutzer in den Drucker eingesetzten Komponenten - Bedruckungsobjekt und Magazin - nicht aufeinander abgestimmt sind, was ansonsten zu einem Druck mit verminderter Qualität führen könnte.

In der Steuer- und Auswerteeinheit wird dazu die von dem Sensor erfasste Kennzeichnung des eingesetzten Magazins mit einer im Speicher gespeicherten Kennzeichnung für ein für das zu bedruckende Bedruckungsobjekt zulässiges Magazin verglichen. Dadurch wird überprüft, ob das Bedruckungsobjekt auch tatsächlich in ein Magazin eingelegte ist, das für das zu bedruckende Bedruckungsobjekt vorgesehen ist. So kann verhindert werden, dass ein Bedruckungsobjekt in schlechterer Druckqualität bedruckt wird, weil vom Benutzer versehentlich ein nicht für das ausgewählte Bedruckungsobjekt vorgesehenes Magazin in die Aufnahmevorrichtung eingesetzt bzw. ein Bedruckungsobjekt in ein nicht dazu vorgesehenes Magazin eingelegt worden ist.

Im Rahmen der vorliegenden Erfindung ist dabei herausgefunden worden, dass die Qualität der auf dem Bedruckungsobjekt aufgedruckten Druckmuster auch davon abhängt, dass ein Magazin in der Aufnahmevorrichtung angeordnet ist, das für das zu bedruckende Bedruckungsobjekt explizit vorgesehen ist. Ist dagegen ein Magazin ausgewählt worden, in das das Bedruckungsobjekt zwar mechanisch hineinpasst, da die in dem Magazin ausgebildete Auflagefläche ausreichend groß ist, so kann es gleichwohl zu einer Bedruckung in schlechterer Druckqualität kommen. Dies kann beispielsweise der Fall sein, wenn die Tiefe der Auflagefläche in dem Magazin nicht exakt auf die Materialstärke des Bedruckungsobjekts abgestimmt ist, so dass beim Bedruckungsvorgang der Abstand zwischen dem Bedruckungsobjekt und der Druckvorrichtung, insbesondere dem Thermodruckkopf eines Thermotransferdruckers, nicht dem eigentlich vorgesehenen optimalen Abstand entspricht.

Ergibt der in der Steuer- und Auswerteeinheit vorgenommene Vergleich, dass die vom Sensor erfasste Kennzeichnung des eingesetzten Magazins nicht mit einer im Speicher gespeicherten Kennzeichnungen für ein für das Bedruckungsobjekt geeignetes Magazin übereinstimmt, so wird eine entsprechende Fehlermeldung ausgegeben. Bei der Fehlermeldung kann es sich beispielsweise um das Aufleuchten einer entsprechenden Anzeige oder um einen Warnton handeln.

Bei der Fehlermeldung handelt es sich vorzugsweise um eine entsprechende Anzeige in einem Display des Druckers. Zum Fortführen des Druckprozesses kann dabei vorgesehen sein, dass die Fehlermeldung vom Benutzer aktiv quittiert werden muss, eine weitere Bearbeitung des Druckprozesses somit unterbrochen ist, bis der Benutzer die Fehlermeldung quittiert und den Fehler behoben hat. Die Initialisierung des Druckvorgangs, insbesondere die Eingabe der Druckdaten in eine entsprechende Eingabemaske wird dabei unterbrochen, bis der Fehler behoben worden ist, d. h. in der Aufnahmevorrichtung das richtige Bedruckungsobjekt und das dazu passende Magazin angeordnet sind.

Gemäß einer weiteren bevorzugten Ausgestaltung des erfindungsgemäßen Verfahrens wird darüber hinaus auch die in den Drucker eingesetzte Druckerkassette daraufhin überprüft, ob es sich um eine für das ausgewählte Bedruckungsobjekt geeignete und damit zulässige Druckerkassette handelt. Nach dem Einsetzen einer eine entsprechende Kennzeichnung aufweisenden auswechselbaren Druckerkassette in das Gehäuse des Druckers wird dazu mittels mindestens eines weiteren im Gehäuse angeordneten optischen Sensors die Kennzeichnung der Druckerkassette erfasst. Dann erfolgt ein entsprechender Vergleich der von dem mindestens einen optischen Sensor erfassten Kennzeichnung der eingelegten Druckerkassette mit einer im Speicher abgelegten Kennzeichnung für eine für das zu bedruckende Bedruckungsobjekt zulässige Druckerkassette in der Steuer- und Auswerteeinheit. Anschließend wird eine Fehlermeldung ausgegeben, wenn die vom Sensor erfasste Kennzeichnung der eingesetzten Druckerkassette nicht mit der im Speicher gespeicherten Kennzeichnung für eine zulässige Druckerkassette übereinstimmt.

Bei der bevorzugten Ausgestaltung des erfindungsgemäßen Verfahrens erfolgt somit zusätzlich zur automatischen Auswahl der für das eingelegte Bedruckungsobjekt vorgesehenen Eingabemaske auch eine automatische Überprüfung, ob alle für den Druckvorgang benötigten Komponenten, die vom Benutzer ausgewählt und eingesetzt worden sind, für den durchzuführenden Druckprozess zulässig sind.

Gemäß einem weiteren Verfahrens schritt kann vorgesehen sein, dass die ausgewählte Eingabemaske oder die ausgewählten Eingabemasken auf der Eingabe- und Anzeigeeinrichtung nur dann angezeigt werden, wenn zuvor der in der Steuer- Auswerteeinheit durchgeführte Vergleich der Kennzeichnungen keine Abweichung ergeben hat, wenn also ein zulässiges Magazin und eine zulässige Druckerkassette eingesetzt worden sind.

Darüber hinaus kann als weiterer Verfahrensschritt auch vorgesehen sein, dass dann, wenn bei dem in der Auswerteeinheit durchgeführten Vergleich der Kennzeichnung des Magazins eine Abweichung festgestellt worden ist, die Aufnahmevorrichtung aus dem Druckraum in die Be- und Entladeposition außerhalb des Druckraums fährt. Der Benutzer kann dann direkt das beanstandete Magazin entnehmen und durch ein zulässiges Magazin austauschen.

Die eingangs genannte Aufgabe ist bei einem Drucker zur Durchführung des erfindungsgemäßen Verfahrens mit den Merkmalen des Patentanspruchs 7 gelöst. Der Drucker weist ein Gehäuse, mit einem innerhalb des Gehäuses ausgebildeten Druckraum, eine Druckvorrichtung, eine Aufnahmevorrichtung, eine Steuer- und Auswerteeinheit, einen Speicher und eine Eingabe- und Anzeigeeinrichtung auf. Die Aufnahmevorrichtung dient dabei zur Aufnahme eines auswechselbaren Magazins, in dem das zu bedruckende Bedruckungsobjekt angeordnet ist, wobei die Aufnahmevorrichtung zwischen einer Be- und Entladeposition außerhalb des Druckraums und einer Druckposition innerhalb des Druckraums verfahrbar ist.

Erfindungsgemäß sind in dem Gehäuse mindestens ein optischer Sensor zur Erfassung einer am Bedruckungsobjekt angeordneten Kennzeichnung und / oder mindestens ein optischer Sensor zur Erfassung einer am Magazin angeordneten Kennzeichnung vorgesehen. Die jeweilige Kennzeichnung kann dabei von einem Sensor erfasst werden, wenn die Aufnahmevorrichtung mit dem Magazin und dem darin eingesetzten Bedruckungsobjekt aus der Be- und Entladeposition außerhalb des Druckraums in den Druckraum hineinfährt.

Die Steuer- und Auswerteeinheit des Druckers ist dabei dazu ausgebildet, anhand der vom Sensor erfassten Kennzeichnung des eingesetzten Bedruckungsobjekts aus einer Mehrzahl von im Speicher gespeicherten Eingabemasken die für das eingesetzte Bedruckungsobjekt vorgesehene bzw. geeignete Eingabemaske auszuwählen und auf der Eingabe- und Anzeigeeinrichtung anzuzeigen. Alternativ oder zusätzlich ist die Steuer- und Auswerteeinheit dazu ausgebildet anhand der vom Sensor erfassten Kennzeichnung des eingesetzten Magazins aus der Mehrzahl von im Speicher gespeicherten Eingabemasken einzelne Eingabemasken auszuwählen und diese auf der Eingabe- und Anzeigeeinrichtung anzuzeigen.

Bei dem erfindungsgemäßen Drucker kann somit anhand der automatischen Erfassung des Bedruckungsobjekts durch die Steuer- und Auswerteeinheit direkt die für das Bedruckungsobjekt vorgesehene Eingabemaske auf der Eingabe- und Anzeigeeinrichtung angezeigt werden, so dass der Benutzer dann direkt mit der Eingabe der Druckdaten beginnen kann. Der Benutzer muss sich somit nicht mehr zeitaufwändig mit einzelne Tastendrücken durch eine Vielzahl von Menüpunkten und Filtereingaben durchwählen, um das eingelegte Bedruckungsobjekt und damit die richtige Eingabemaske auszuwählen. Erfolgt anstelle der Erfassung der Kennzeichnung des Bedruckungsobjekts die Erfassung der Kennzeichnung des Magazins, so kann die Anzahl der möglichen Eingabemasken, aus denen der Benutzer die richtige auswählen muss, zumindest stark eingegrenzt werden. Ein Magazin kann beispielsweise für 5 bis 10 unterschiedliche Bedruckungsobjekte vorgesehen sein, so dass nach Erfassung des Magazins (nur) diese Bedruckungsobjekte oder die für diese Bedruckungsobjekte vorgesehenen Eingabemasken angezeigt werden, aus denen der Benutzer dann das eingelegte Bedruckungsobjekt oder die richtige Eingabemaske auswählen muss.

Gemäß einer bevorzugten Ausgestaltung des erfindungsgemäßen Druckers sind im Gehäuse mindestens ein optischer Sensor zur Erfassung einer am Bedruckungsobjekt angeordneten Kennzeichnung und ein optischer Sensor zur Erfassung der Kennzeichnung des Magazins vorgesehen. Da sich das Bedruckungsobjekt zusammen mit dem Magazin in der Aufnahmevorrichtung befindet, ist die Verwendung jeweils eines optischen Sensors zur Erfassung der Kennzeichnung des Bedruckungsobjekts und des Magazins ausreichend, da sich das Bedruckungsobjekt und das Magazin bei entsprechender Anordnung der optischen Sensoren beim Einfahren der Aufnahmevorrichtung in die Druckposition innerhalb des Druckraums an den Sensoren vorbei bewegt.

Grundsätzlich ist dabei die Verwendung eines einzigen optischen Sensors sowohl zur Erfassung der Kennzeichnung des Bedruckungsobjekts als auch zur Erfassung der Kennzeichnung des Magazin ausreichend, wenn die Kennzeichnung am Bedruckungsobjekt und die Kennzeichnung am Magazin so zueinander angeordnet sind, dass sie beim Einfahren der Aufnahmevorrichtung nacheinander den optischen Sensor passieren. Gemäß einer bevorzugten Ausgestaltung sind zur Erfassung der Kennzeichnung am Bedruckungsobjekt und zur Erfassung der Kennzeichnung am Magazin jedoch zwei optische Sensoren vorgesehen, die vorzugsweise so innerhalb des Gehäuses zueinander angeordnet sind, dass ihre optischen Achsen im Wesentlichen senkrecht zueinander verlaufen. Verläuft die Bewegungsrichtung der Aufnahmevorrichtung horizontal, so bedeutet dies, dass die optische Achse des einen Sensors ebenfalls horizontal ausgerichtet ist, während die optische Achse des anderen Sensors vertikal verläuft.

Gemäß einer bevorzugten Ausgestaltung des Druckers ist die Steuer- und Auswerteeinheit dazu ausgebildet, einen Vergleich der von dem Sensor erfassten Kennzeichnung des Magazins mit einer im Speicher gespeicherten Kennzeichnung für ein Magazin durchzuführen, das für das zu bedruckende Bedruckungsobjekt vorgesehen und damit zulässig ist. Darüber hinaus wird von der Steuer- und Auswerteeinheit eine Fehlermeldung initiiert, wenn der durchgeführte Vergleich eine Abweichung zwischen der erfassten Kennzeichnung und der gespeicherten Kennzeichnung ergibt.

Bei einer weiteren Ausgestaltung ist in dem Gehäuse des Druckers darüber hinaus mindestens ein weiterer optischer Sensor zur Erfassung einer an einer auswechselbaren Druckerkassette angeordneten Kennzeichnung vorgesehen. In der Auswerteeinheit erfolgt dann ein Vergleich der vom Sensor erfassten Kennzeichnung der eingesetzten Druckerkassette mit einer im Speicher gespeicherten Kennzeichnung für eine Druckerkassette, die für das zu bedruckende Bedruckungsobjekt geeignet ist.

Handelt es sich bei der Kennzeichnung gemäß einer vorteilhaften Ausgestaltung um eine Strichcode-Kennzeichnung, die sich aus mehreren nebeneinander angeordneten Einzelstrichen ergibt, so werden bevorzugt mehrere optische Sensoren verwendet, die nebeneinander im Gehäuse angeordnet sind, wobei die Anordnung der Sensoren der Erstreckung der Kennzeichnung, insbesondere der Anordnung der Einzelstriche einer Strichcode-Kennzeichnung entspricht. Weist die Strichcode-Kennzeichnung beispielsweise sechs nebeneinander angeordnete Einzelstriche auf, so sind dann auch sechs optische Sensoren nebeneinander im Gehäuse angeordnet, wobei sich jeder Einzelstrich innerhalb des Erfassungsbereichs eines optischen Sensors befindet, wenn die Druckerkassette im Gehäuse richtig angeordnet ist. Durch die Verwendung von mehreren Sensoren können diese stationär im Gehäuse angeordnet sein, auch wenn sich die Druckerkassette - anders als die Aufnahmevorrichtung - nicht an den Sensoren vorbei bewegt.

Die einzelnen Kennzeichnungen, die an den von einem Benutzer einzusetzenden Komponenten angeordnet sind, sind vorzugsweise als Strichcode-Kennzeichnungen ausgebildet. Die einzelnen Strichcode-Kennzeichnungen weisen dabei mehrere hintereinander angeordnete Einzelstriche auf, die jeweils eine vorbestimmte Längserstreckung und Breite aufweisen. Typischerweise sind dabei zwei Arten von Einzelstrichen vorgesehen, nämlich einerseits helle, insbesondere weiße Einzelstriche, und andererseits dunkle, insbesondere schwarze Einzelstriche, so dass ein maximaler Kontrast zwischen den beiden Arten von Einzelstrichen gegeben ist. Die einzelnen Markierungen können dann auf besonders einfache Art und Weise von einem Reflexlicht-Taster als optischen Sensor erfasst werden.

Im Einzelnen gibt es nun eine Vielzahl von Möglichkeiten, das erfindungsgemäße Verfahren sowie den erfindungsgemäßen Drucker auszugestalten und weiterzubilden. Dazu wird verwiesen sowohl auf die den Patentansprüchen 1 und 7 nachgeordneten Patentansprüche, als auch auf die nachfolgende Beschreibung bevorzugte Ausführungsbeispiele in Verbindung mit der Zeichnung. In der Zeichnung zeigen
- Fig. 1: einen Drucker in schematischer Darstellung, im Querschnitt und im Längsschnitt,
- Fig. 2: eine schematische Darstellung einer Aufnahmevorrichtung des Druckers, von der Seite,
- Fig. 3: ein erstes Ausführungsbeispiel eines Bedruckungsobjekts,
- Fig. 4: ein zweites Ausführungsbeispiel eines Bedruckungsobjektes,
- Fig. 5: die Darstellung zweier Eingabemasken und zweier Eingabefenster auf der Eingabe- und Anzeigeeinrichtung eines Druckers,
- Fig. 6: eine Druckerkassette eines Druckers, in perspektivischer Darstellung, und
- Fig. 7: ein Ausführungsbeispiel eines Druckers, in perspektivischer Darstellung.

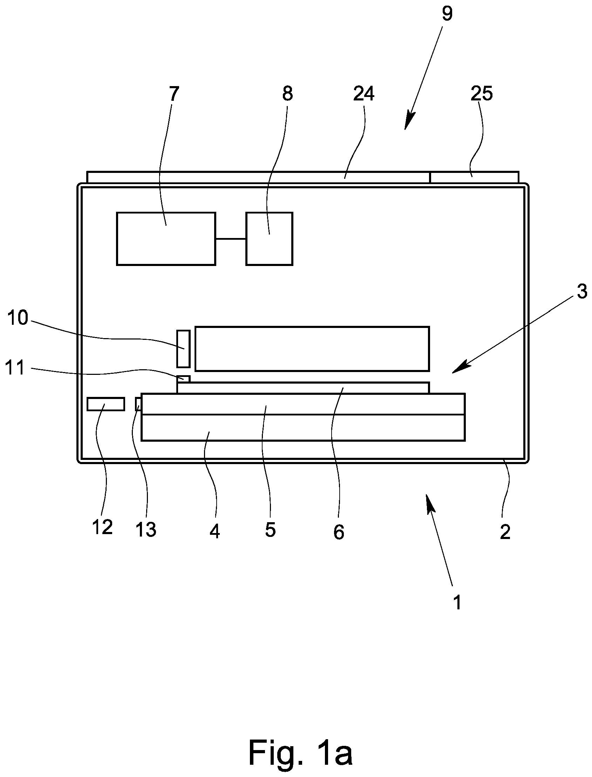

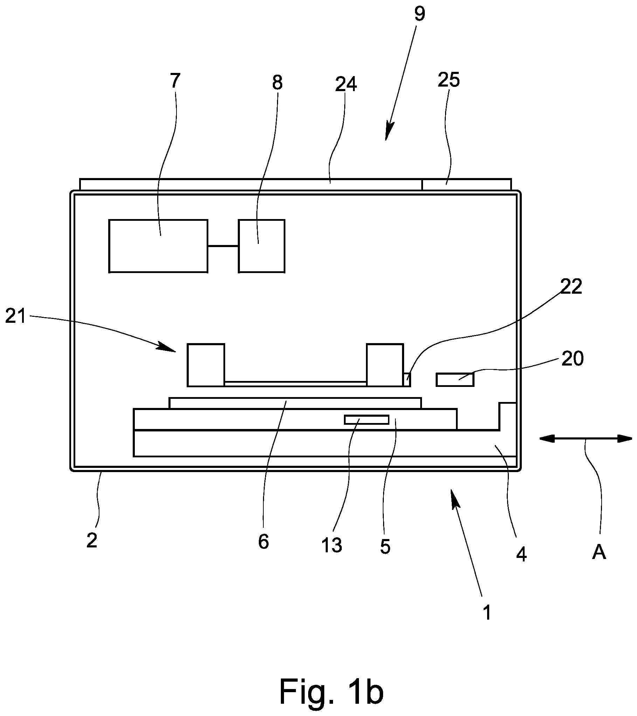

Fig. 1 zeigt einen Drucker 1 gemäß der vorliegenden Erfindung in schematischer Darstellung, im Querschnitt (Fig. la) und im Längsschnitt (Fig. 1b). Der Drucker 1 dient zur Durchführung des erfindungsgemäßen Verfahrens, wobei es sich bei dem Drucker 1 vorzugsweise um einen Thermotransferdrucker handelt. Der Drucker 1 weist ein Gehäuse 2 auf, in dem ein Druckraum 3 ausgebildet ist. Eine nach Art einer Schublade oder eines Transportschlittens ausgebildete Aufnahmevorrichtung 4 kann zwischen einer Be- und Entladeposition außerhalb des Druckraums 3 und einer Druckposition innerhalb des Druckraums 3 verfahren werden. Die Bewegungsrichtung der Aufnahmevorrichtung 4 verläuft dabei in Fig. 1a in die Zeichnungsebene und in Fig. 1b in Richtung des Pfeils A, wobei in beiden Darstellungen gemäß Fig. 1 die Aufnahmevorrichtung 4 innerhalb des Druckraums 3, also in der Druckposition, angeordnet ist.

Die Aufnahmevorrichtung 4 dient zur Aufnahme eines Magazins 5, in das das jeweils zu bedruckende Bedruckungsobjekt 6 eingelegt werden kann. Dadurch ist gewährleistet, dass das zu bedruckende Bedruckungsobjekt 6 auf einfache und komfortable Art und Weise in den Druckraum 3 eingeführt werden kann und darüber hinaus dort auch stets in einer vorgegebenen Position angeordnet ist. Damit mit dem Drucker 1 unterschiedliche Bedruckungsobjekte 6 bedruckt werden können, ist die Aufnahmevorrichtung 4 zur Aufnahme eines auswechselbaren Magazins 5 ausgebildet, in das das zu bedruckende Bedruckungsobjekt 6 eingelegt werden kann. Soll ein Bedruckungsobjekt 6 bedruckt werden, so wird dieses in ein für das Bedruckungsobjekt 6 vorgesehenes Magazin 5 eingelegt und das Magazin 5 mit dem Bedruckungsobjekt 6 in die Aufnahmevorrichtung 4 eingesetzt, wozu sich diese in ihrer Be- und Entnahmeposition außerhalb des Druckraums 3 befindet. Natürlich kann auch zunächst das Magazin 5 in die Aufnahmevorrichtung 4 eingesetzt und dann das Bedruckungsobjekt 6 in das Magazin 5 eingelegt werden.

Zur Steuerung des Druckvorgangs sind in dem Drucker 1 darüber hinaus noch eine Steuer- und Auswerteeinheit 7 sowie ein mit der Steuer- und Auswerteeinheit 7 verbundener Speicher angeordnet, die in Fig. 1 beide nur schematisch dargestellt sind. Die Steuer- und Auswerteeinheit 7 ist darüber hinaus auch noch mit einer Eingabe- und Anzeigeeinrichtung 9 verbunden, über die Druckparameter und Druckdaten angezeigt und eingegeben werden können. Die Eingabe- und Anzeigeeinrichtung 9 ist vorzugsweise als Touchscreen ausgebildet, der auf der Oberseite des Druckers 1 angeordnet ist.

Wie aus Fig. 1a erkennbar ist, ist in dem Drucker 1 ein optischer Sensor 10 angeordnet, der der Erfassung einer an dem Bedruckungsobjekt 6 angebrachten Kennzeichnung 11 dient. Darüber hinaus ist innerhalb des Gehäuses 2 des Druckers 1 noch ein weiterer optischer Sensor 12 angeordnet, der eine am Magazin 5 angebrachte Kennzeichnung 13 erfasst. Die beiden optischen Sensoren 10, 12 sind dabei derart innerhalb des Gehäuses 2 angeordnet, dass ihre optischen Achsen senkrecht zueinander verlaufen. Darüber hinaus verläuft bei beiden Sensoren 10, 12 die optische Achse auch senkrecht zur Bewegungsrichtung A der Aufnahmevorrichtung 4, wie aus Fig. 1b ersichtlich ist. Da sich darüber hinaus die Längserstreckung sowohl der Kennzeichnung 11 des Bedruckungsobjekts 6 als auch der Kennzeichnung 13 des Magazins 5 parallel zur Bewegungsrichtung A der Aufnahmevorrichtung 4 erstreckt, werden die an dem Bedruckungsobjekt 6 bzw. am Magazin 5 angeordneten Kennzeichnungen 11, 13 an den jeweiligen Sensoren 10, 12 vorbeigeführt, wenn die Aufnahmevorrichtung 4 aus der Be- und Entladeposition in die Druckposition innerhalb des Druckraums 3 verfahren wird. Dadurch können beide Sensoren 10, 12 stationär im Gehäuse 3 angeordnet sein. Wie aus Fig. 1a ersichtlich ist, ist dazu die Kennzeichnung 11 des Bedruckungsobjekts auf dessen Oberfläche angeordnet, während die Kennzeichnung 13 an einer Seitenfläche des Magazins 5 angeordnet ist.

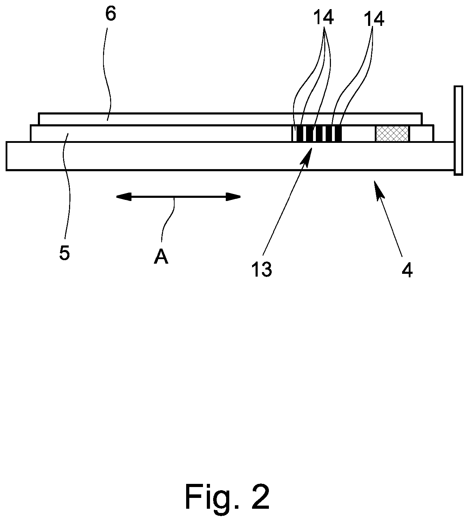

Wie aus Fig. 2 ersichtlich ist, handelt es sich bei der Kennzeichnung 13 des Magazins 5 vorzugsweise um eine Strichcode-Kennzeichnung, die aus mehreren hintereinander angeordneten Einzelstrichen 14 besteht. Zur Erfassung der Strichcode-Kennzeichnung 13 bzw. der Einzelstriche 14 kann ein einfacher Reflexlicht-Taster als optischer Sensor 12 verwendet werden. Der optische Sensor 12 erkennt dabei, ob es sich bei dem gerade in seiner optischen Achse angeordneten Einzelstrich 14 um einen hellen, insbesondere weißen Einzelstrich 14 oder um einen dunklen, insbesondere schwarzen Einzelstrich 14 handelt.

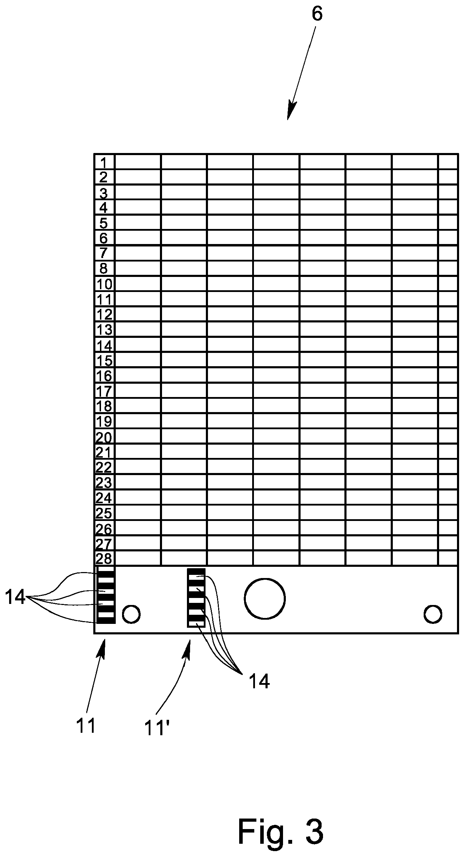

Die Kennzeichnung 11 des Bedruckungsobjekts 6 kann dabei ebenfalls als Strichcode-Kennzeichnung ausgebildet sein, wie dies bei dem Ausführungsbeispiel gemäß Fig. 3 der Fall ist. Hier ist ein US-Material als Bedruckungsobjekt 6 dargestellt, bei dem darüber hinaus eine zweite Kennzeichnung 11' vorgesehen ist, die parallel zur ersten Kennzeichnung 11 auf dem Bedruckungsobjekt 6 angeordnet ist, wobei die beiden Strichcode-Kennzeichnungen 11, 11' um 180° verdreht zueinander angeordnet sind. Zur gleichzeitigen, redundanten Erfassung der beiden Strichcode-Kennzeichnungen 11, 11' sind im Gehäuse 2 des Druckers 1 zwei optische Sensoren 10 nebeneinander angeordnet.

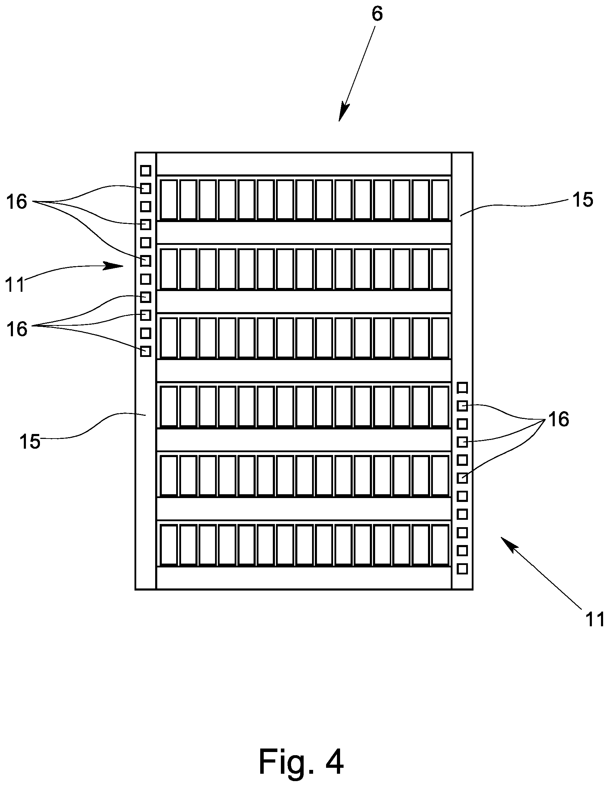

Bei dem Ausführungsbeispiel des Bedruckungsobjekt 6 gemäß Fig. 4, die ein UC-Material zeigt, ist die Kennzeichnung 11 als Lochmuster ausgebildet, d. h. im Randbereich 15 des Bedruckungsobjekts 6 können an vorgegebenen Positionen freie Löcher 16 ausgebildet sein. Bei einer als Lochmuster ausgebildeten Kennzeichnung 11 wird als optischer Sensor 10 vorzugsweise eine Lichtschranke verwendet, so dass mittels der Lichtschranke feststellbar ist, ob an den vorgegebenen Positionen ein Loch 16 ausgebildet ist oder nicht. Ist an einer vorgegebenen Position ein Loch 16 ausgebildet, so gelangt ein vom Sender der Lichtschranke ausgesandter Lichtstrahl durch das Loch 16 zum gegenüberliegenden Empfänger der Lichtschranke. Ist an einer vorgegebenen Position dagegen kein Loch 16 ausgebildet, so wird der vom Sender ausgesandte Lichtstrahl durch das Material des Randbereichs 15 des Bedruckungsobjekts 6 unterbrochen, so dass er nicht zum gegenüberliegenden Empfänger der Lichtschranke gelangt.

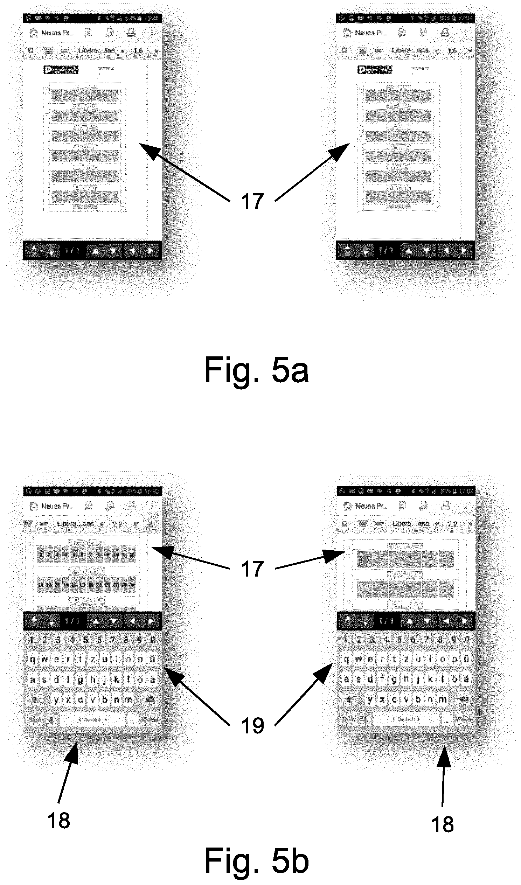

Fig. 5a zeigt zwei Ausführungsbeispiele einer Eingabemaske 17, wie sie auf der als Touchscreen ausgebildeten Eingabe- und Anzeigeeinrichtung 9 angezeigt wird. Die jeweilige Eingabemaske 17 ist dabei von der Steuer- und Auswerteeinheit 7 anhand der vom Sensor 10 erfassten Kennzeichnung 11 des eingesetzten Bedruckungsobjekts 6 ausgewählt worden, so dass eine umständliche und zeitaufwändige Auswahl der zu dem eingelegten Bedruckungsobjekt 6 passenden Eingabemaske 17 bei dem erfindungsgemäßen Drucker 1, bei dem das erfindungsgemäße Verfahren angewandt wird, nicht erforderlich ist. Wie aus einem Vergleich der beiden Darstellungen in Fig. 5a erkennbar ist, unterscheiden sich die beiden Eingabemasken 17 etwas voneinander, da die beiden Eingabemasken 17 für unterschiedliche Bedruckungsobjekte 6 vorgesehen sind. Die jeweilige Eingabemaske 17 ermöglicht es einem Benutzer, auf einfache und komfortable Art und Weise direkt die Druckdaten für das eingelegte Bedruckungsobjekt 6 einzugeben.

Fig. 5b zeigt die zu den Eingabemasken 17 korrespondierenden Eingabefenster 18, wie sie zur Eingabe der Druckdaten auf der Eingabe- und Anzeigeeinrichtung 9 angezeigt werden. Die Eingabefenster 18 weisen neben einem Ausschnitt der Eingabemasken 17 ein Tastaturfeld 19 auf. Dadurch kann der Benutzer bei der Eingabe der Druckdaten über das Tastaturfeld 19 direkt erkennen, was aufgrund seiner Eingabe nach dem Druck auf den einzelnen Kennzeichnungs- und Markierungsschildern des Bedruckungsobjekts 6 dargestellt ist. Wird nur ein kleines Bedruckungsobjekt bedruckt, so dass auch die Eingabemaske nur geringe Abmessungen aufweist, so kann die Eingabemaske auch vollständig in dem Eingabefenster dargestellt sein.

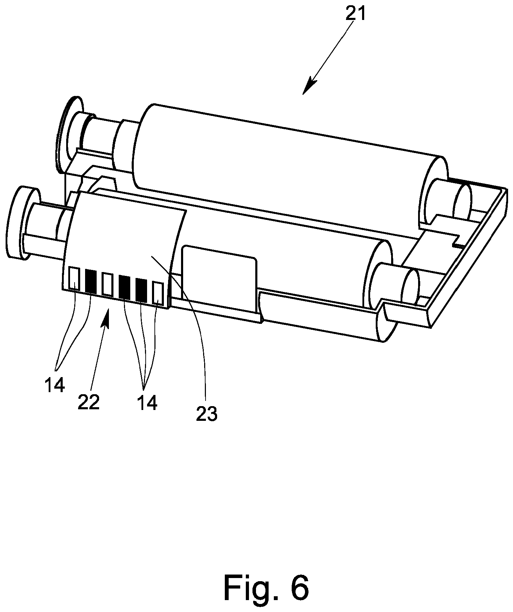

Bei der bevorzugten Ausgestaltung des erfindungsgemäßen Druckers 1 sind neben dem Sensor 12 für das Magazin 5 und dem Sensor 10 für das Bedruckungsobjekt 6 noch mehrere weitere Sensoren 20 zur Erkennung einer an der auswechselbaren Druckerkassette 21 angebrachten Kennzeichnung 22 im Gehäuse 2 angeordnet. Da eine in das Gehäuse 2 des Druckers 1 eingesetzte Druckerkassette 21 dort stationär angeordnet ist, sich also nicht mit der Aufnahmevorrichtung 4 bewegt, sind zur Erkennung der ebenfalls als Strichcode ausgebildeten Kennzeichnung 22 der Druckerkassette 21 mehrere optische Sensoren 20 in Längserstreckung der Kennzeichnung 22 nebeneinander im Gehäuse 2 angeordnet. Die optischen Sensoren 20, die bei der Darstellung gemäß Fig. 1b in der Zeichnungsebene hintereinander angeordnet sind, dienen jeweils zur Erfassung eines Einzelstrichs 14 der Strichcode-Kennzeichnung 22 der Druckerkassette 21. Wie aus Fig. 6 erkennbar ist, kann die Kennzeichnung 22 der Druckerkassette 21 einfach auf einem Etikett 23 aufgebracht sein, das an einer vorgegebenen Position an der Druckerkassette 21 aufgeklebt ist. Auf dem Etikett 23 können dann vorzugsweise zusätzlich die Artikelbezeichnung, die Artikelnummer und gegebenenfalls ein Logo aufgebracht sein.

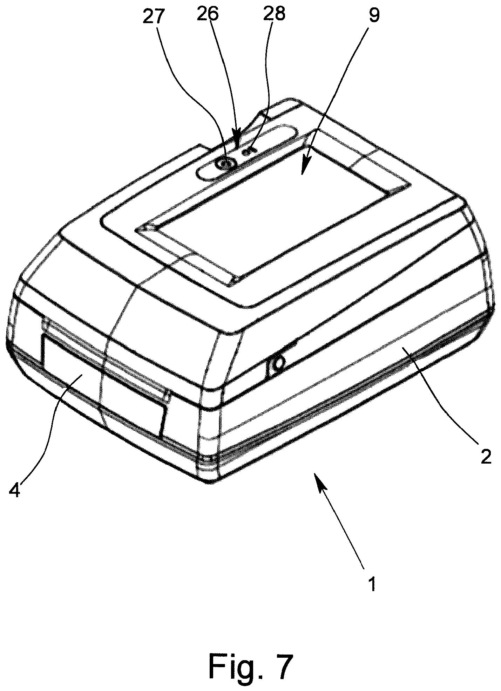

Fig. 7 zeigt eine perspektivische Darstellung einer bevorzugten Ausgestaltung eines erfindungsgemäßen Druckers 1 als Thermotransferdrucker. Der Drucker 1 ist dabei als portables Gerät ausgebildet, das aufgrund seines geringen Gewichtes von weniger als 10 kg und seiner geringen Grundfläche, die in etwa den Abmessungen eines DIN-A 4 Blattes entspricht, vom Benutzer bedarfsweise an unterschiedliche Einsatzorte platziert werden kann. Zur Durchführung eines gewünschten Druckauftrages weist der Drucker 1 an seiner Oberseite einen Touchscreen als Eingabe- und Anzeigeeinrichtung 9 auf. Alternativ kann die Eingabe- und Anzeigeeinrichtung 9 auch ein separates Display 24 sowie eine separate Tastatur 25 aufweisen, wie dies in Fig. 1 angedeutet ist.

Aus der perspektivischen Darstellung des Druckers 1 in Fig. 7 ist darüber hinaus ersichtlich, dass neben der Eingabe- und Anzeigeeinrichtung 9 noch ein weiteres Bedienfeld 26 vorgesehen ist, in dem neben einem Ein/Aus-Schalter 27 auch eine Taste 28 zum Einfahren der Aufnahmevorrichtung 4 angeordnet ist. Das erfindungsgemäße Verfahren kann somit dadurch gestartet werden, dass nach dem Einlegen das Magazins 5 mit dem Bedruckungsobjekt 6 in die Aufnahmevorrichtung 4 die Taste 28 gedrückt wird, so dass die Aufnahmevorrichtung 4 in den Druckraum 3 im Gehäuse 2 einfährt.

## Patentansprüche

1. Verfahren zur Eingabe von Druckdaten für die Bedruckung eines Bedruckungsobjekts (6) mit einem Drucker (1), wobei der Drucker (1) ein Gehäuse (2) mit einem innerhalb des Gehäuses (2) ausgebildeten Druckraum (3), eine Druckvorrichtung, eine Aufnahmevorrichtung (4) für ein der Aufnahme des zu bedruckenden Bedruckungsobjekts (6) dienendes auswechselbares Magazin (5), eine Steuer- und Auswerteeinheit (7), einen Speicher (8) und eine Eingabe- und Anzeigeeinrichtung (9) aufweist, wobei das Verfahren folgende Schritte umfasst:
• Einsetzen eines Magazins (5) mit dem zu bedruckenden Bedruckungsobjekt (6) in die Aufnahmevorrichtung (4), wobei sich die Aufnahmevorrichtung (4) in einer Be- und Entladeposition außerhalb des Druckraums (3) befindet
• Einfahren der Aufnahmevorrichtung (4) in den Druckraum (3), wobei mindestens ein im Gehäuse (2) angeordneter optischer Sensor (10) eine am Bedruckungsobjekt (6) angeordnete Kennzeichnung (11, 11') und/oder mindestens ein im Gehäuse (2) angeordneter optischer Sensor (12) eine am Magazin (5) angeordnete Kennzeichnung (13) erfasst
• Auswahl einer Eingabemaske (17) aus einer Mehrzahl von im Speicher (8) gespeicherten Eingabemasken durch die Steuer- und Auswerteeinheit (7) anhand der vom Sensor (10) erfassten Kennzeichnung (11, 11') des eingesetzten Bedruckungsobjekts (6) oder Auswahl einzelner Eingabemasken (17) aus der Mehrzahl von im Speicher (8) gespeicherten Eingabemasken durch die Steuer- und Auswerteeinheit (7) anhand der vom Sensor (12) erfassten Kennzeichnung (13) des eingesetzten Magazins (5)
• Anzeige der ausgewählten Eingabemaske (17) oder der ausgewählten Eingabemasken (17) auf der Eingabe- und Anzeigeeinrichtung (9).

2. Verfahren nach Anspruch 1, wobei mindestens ein im Gehäuse (2) angeordneter optischer Sensor (10) eine am Bedruckungsobjekt (6) angeordnete Kennzeichnung (11, 11') und mindestens ein im Gehäuse (2) angeordneter optischer Sensor (12) eine am Magazin (5) angeordnete Kennzeichnung (13) erfasst, **gekennzeichnet durch** folgende Schritte:
• Durchführung eines Vergleichs der von dem mindestens einen optischen Sensor (12) erfassten Kennzeichnung (13) des eingesetzten Magazins (5) mit einer im Speicher (8) gespeicherten Kennzeichnung für eine für das zu bedruckende Bedruckungsobjekt (6) zulässiges Magazin (5) in der Steuer- Auswerteeinheit (7)
• Ausgeben einer Fehlermeldung, wenn die vom Sensor (12) erfasste Kennzeichnung (13) des eingesetzten Magazins (5) nicht mit der im Speicher (8) gespeicherten Kennzeichnung für ein zulässiges Magazin (5) übereinstimmt.

3. Verfahren nach einem der Ansprüche 1 oder 2, **gekennzeichnet durch** folgende Schritte:
• Einsetzen einer auswechselbaren Druckerkassette (21) in das Gehäuse (2), wobei an der Druckerkassette (21) eine Kennzeichnung (22) angeordnet ist,
• Erfassen der Kennzeichnung (22) an der Druckerkassette (21) mittels mindestens eines im Gehäuse (2) angeordneten optischen Sensors (20),
• Durchführung eines Vergleichs der von dem mindestens einen optischen Sensor (20) erfassten Kennzeichnung (22) der eingesetzten Druckerkassette (21) mit einer im Speicher (8) gespeicherten Kennzeichnung für eine für das zu bedruckende Bedruckungsobjekt (6) zulässige Druckerkassette (21) in der Steuer- Auswerteeinheit (7),
• Ausgeben einer Fehlermeldung, wenn die vom Sensor (20) erfasste Kennzeichnung (22) der eingesetzten Druckerkassette (21) nicht mit der im Speicher (8) gespeicherten Kennzeichnung für eine zulässige Druckerkassette (21) übereinstimmt.

4. Verfahren nach Anspruch 2 oder 3, **dadurch gekennzeichnet, dass** die ausgewählte Eingabemaske (17) oder die ausgewählten Eingabemasken (17) auf der Eingabe- und Anzeigeeinrichtung (9) nur dann angezeigt werden, wenn zuvor der in der Steuer- Auswerteeinheit (7) durchgeführte mindestens eine Vergleich der Kennzeichnungen (11, 11', 13, 22) keine Abweichung ergeben hat.

5. Verfahren nach einem der Ansprüche 2 bis 4, **dadurch gekennzeichnet, dass** die Aufnahmevorrichtung (4) aus dem Druckraum (3) in die Be- und Entladeposition außerhalb des Druckraums (3) verfährt, wenn die vom Sensor (12) erfasste Kennzeichnung (13) des eingesetzten Magazins (5) nicht mit der im Speicher (8) gespeicherten Kennzeichnung für ein zulässiges Magazin (5) übereinstimmt.

6. Verfahren nach einem der Ansprüche 1 bis 5, **dadurch gekennzeichnet, dass** das Einfahren der Aufnahmevorrichtung (4) in den Druckraum (3) durch Drücken eines entsprechenden Knopfes bzw. einer Taste (28) gestartet wird.

7. Drucker (1) zur Durchführung des Verfahren nach einem der Ansprüche 1 bis 6, mit einem Gehäuse (2), mit einem innerhalb des Gehäuses (2) ausgebildeten Druckraum (3), mit einer Druckvorrichtung, mit einer Aufnahmevorrichtung (4) für ein auswechselbares Magazin (5) zur Aufnahme des zu bedruckenden Bedruckungsobjekts (6), mit einer Steuer- und Auswerteeinheit (7) und mit einem Speicher (8), wobei die Aufnahmevorrichtung (4) zwischen einer Be- und Entladeposition außerhalb des Druckraums (3) und einer Druckposition innerhalb des Druckraums (3) verfahrbar ist, **dadurch gekennzeichnet, dass** der Drucker (1) zusätzlich eine Eingabe- und Anzeigeeinrichtung (9) aufweist und
dass in dem Gehäuse (2) mindestens ein optischer Sensor (10) zur Erfassungen einer am Bedruckungsobjekt (6) angeordnete Kennzeichnung (11, 11') und/oder mindestens ein optischer Sensor (12) zur Erfassung einer an einem in die Aufnahmevorrichtung (4) eingesetzten Magazin (5) angeordneten Kennzeichnung (13) vorgesehen ist, und
dass die Steuer- und Auswerteeinheit (7) dazu ausgebildet ist, anhand der vom Sensor (10) erfassten Kennzeichnung (11, 11') des eingesetzten Bedruckungsobjekts (6) aus einer Mehrzahl von im Speicher (8) gespeicherten Eingabemasken die für das eingesetzte Bedruckungsobjekt (6) geeignete Eingabemaske (17) und/oder anhand der vom Sensor (12) erfassten Kennzeichnung (13) des eingesetzten Magazins (5) aus einer Mehrzahl von im Speicher (8) gespeicherten Eingabemasken einzelne Eingabemasken (17) auszuwählen, wobei die ausgewählte Eingabemaske (17) oder die ausgewählten Eingabemasken (17) auf der Eingabe- und Anzeigeeinrichtung (9) angezeigt wird.

8. Drucker (1) nach Anspruch 7, **dadurch gekennzeichnet, dass** in dem Gehäuse (2) mindestens ein optischer Sensor (10) zur Erfassung der am Bedruckungsobjekt (6) angeordneten Kennzeichnung (11, 11') und mindestens ein optischer Sensor (12) zur Erfassung der am Magazin (5) angeordneten Kennzeichnung (13) vorgesehen ist, wobei der mindestens eine optische Sensor (10) zur Erfassung der am Bedruckungsobjekt (6) angeordneten Kennzeichnung (11, 11') und der optische Sensor (12) zur Erfassung der am Magazin (5) angeordneten Kennzeichnung (13) so zueinander angeordnet sind, dass ihre optischen Achsen im wesentlichen senkrecht zueinander verlaufen.

9. Drucker (1) nach Anspruch 7 oder 8, **dadurch gekennzeichnet, dass** im Gehäuse (2) mindestens ein weiterer optischer Sensor (20) zur Erfassung einer an einer auswechselbaren Druckerkassette (21) angeordneten Kennzeichnung (22) vorgesehen ist.

10. Drucker (1) nach einem der Ansprüche 7 bis 9, **dadurch gekennzeichnet, dass** die einzelnen optischen Sensoren (10, 12, 20) als Reflexlicht-Taster zur Erfassung jeweils einer Strichcode-Kennzeichnung (11, 11', 13, 22) ausgebildet sind.

## Claims

1. Method for inputting print data for printing upon a print object (6) with a printer (1), wherein the printer (1) has a housing (2) with a print space (3) made within the housing (2), a printing device, a receiving device (4) for an interchangeable magazine (5) which is used to accommodate the print object (6) to be printed upon, a control and evaluation unit (7), a memory (8) and an input and display apparatus (9),
wherein the method comprises the following steps:
• Insertion of a magazine (5) with the print object (6) to be printed upon into the receiving device (4), wherein the receiving device (4) is located in a loading and unloading position outside the print space (3)
• Running of the receiving device (4) into the print space (3), wherein at least one optical sensor (10) located in the housing (2) detects an identification (11, 11') located on the print object (6) and/or at least one optical sensor (12) located in the housing (2) detects an identification (13) which is located on the magazine (5)
• Selection of a suitable input screen (17) from a plurality of input screens stored in the memory (8) by the control and evaluation unit (7) using the identification (11, 11') of the inserted print object (6) detected by the sensor (10) or selection of individual input screens (17) from the plurality of input screens stored in the memory (8) by the control and evaluation unit (7) using the identification (13) of the inserted magazine (5) which has been detected by the sensor (12)
• Display of the selected input screen (17) or of the selected input screens (17) on the input and display apparatus (9).

2. Method according to claim 1, wherein at least one optical sensor (10) which is located in the housing (2) detects an identification (11, 11') located on the print object (6) and at least one optical sensor (12) located in the housing (2) detects an identification (13) located on the magazine (5), **characterized by** the following steps:
• comparison of the identification (13) of the inserted magazine (5) which has been detected by at least one optical sensor (12) to an identification stored in the memory (8) for a magazine (5) which is allowable for the print object (6) which is to be printed upon in the control and evaluation unit (7)
• output of an error message when the identification (13) of the inserted magazine (5) which has been detected by the sensor (12) does not agree with the identification stored in the memory (8) for an allowable magazine (5).

3. Method according to claim 1 or 2, **characterized by** the following steps:
• Insertion of an interchangeable printer cassette (21) into the housing (2), wherein an identification (22) is located on the printer cassette (21),
• Detection of the identification (22) on the printer cassette (21) by means of at least one optical sensor (20) which is located in the housing (2),
• Comparison of the identification (22) of the inserted printer cassette (21) which has been detected by at least one optical sensor (20) to an identification stored in the memory (8) for a printer cassette (21) which is allowable for the print object (6) which is to be printed upon in the control and evaluation unit (7),
• Output of an error message when the identification (22) of the inserted printer cassette (21) which has been detected by the sensor (20) does not agree with the identification stored in the memory (8) for an allowable printer cassette (21).

4. Method according to claim 2 or 3, **characterized in that** the selected input screen (17) or the selected input screens (17) are only displayed on the input and display apparatus (9) when beforehand at least one comparison of the identifications (11, 11', 13, 22) which has been carried out in the controlevaluation unit (7) has not yielded any difference.

5. Method according to any one of claims 2 to 4, **characterized in that** the receiving device (4) travels out of the print space (3) into the loading and unloading position outside the print space (3) when the identification (13) of the inserted magazine (5) which has been detected by the sensor (12) does not agree with the identification stored in the memory (8) for an allowable magazine (5).

6. Method according to any one of claims 1 to 5, **characterized in that** running of the receiving device (4) into the print space (3) is started by pressing a corresponding button or a key (28).

7. Printer (1) for executing the method according to any one of Claims 1 to 6, with a housing (2), with a print space (3) made within the housing (2), with a printing device, with a receiving device (4) for an interchangeable magazine (5) for accommodating the print object (6) which is to be printed upon, with a control and evaluation unit (7), and with a memory (8), wherein the receiving device (4) is movable between a loading and unloading position outside the print space (3) and a printing position within the print space (3),
**characterized in**
**that** the printer (1) additionally has an input and display apparatus (9) that in the housing (2) there is at least one optical sensor (10) for detections of an identification (11, 11') located on the print object (6) and/or at least one optical sensor (12) for detecting an identification (13) located on a magazine (5) which has been inserted into the receiving device (4), and
**that** the control and evaluation unit (7) is made to select the input screen (17) which is suitable for the inserted print object (6) using the identification (11, 11') of the inserted print object (6) detected by the sensor (10) from a plurality of input screens which are stored in the memory (8) and/or individual input screens (17) from a plurality of input screens stored in the memory (8) using the identification (13) of the inserted magazine (5) detected by the sensor (12), wherein the selected input screen (17) or the selected input screens (17) are displayed on the input and display apparatus (9).

8. Printer (1) according to claim 7, **characterized in that** in the housing (2) there is at least one optical sensor (10) for detecting the identification (11, 11') located on the print object (6) and at least one optical sensor (12) for detecting the identification (13) located on the magazine (5), wherein the at least one optical sensor (10) for detecting the identification (11, 11') located on the print object (6) and the optical sensor (12) for detecting the identification (13) located on the magazine (5) are arranged to one another such that their optical axes run essentially perpendicular to one another.

9. Printer (1) according to Claim 7 or 8, **characterized in that** in the housing (2) there is at least one further optical sensor (20) for detecting an identification (22) which is located on an interchangeable printer cassette (21).

10. Printer (1) according to any one of Claims 7 to 9, **characterized in that** the individual optical sensors (10, 12, 20) are made as a reflex light scanner for detecting one bar code identification (11, 11', 13, 22) at a time.

## Revendications

1. Procédé pour saisir des données d'impression pour l'impression d'un objet d'impression (6) avec une imprimante (1), l'imprimante (1) possédant un boîtier (2) pourvu d'un espace d'impression (3) formé à l'intérieur du boîtier (2), un arrangement d'impression, un arrangement d'accueil (4) pour un chargeur (5) interchangeable servant à accueillir l'objet d'impression (6) à imprimer, une unité de commande et d'interprétation (7), une mémoire (8) et un dispositif de saisie et d'affichage (9),
le procédé comprenant les étapes suivantes :
• insertion du chargeur (5) pourvu de l'objet d'impression (6) à imprimer dans l'arrangement d'accueil (4), l'arrangement d'accueil (4) se trouvant dans une position de chargement et de déchargement à l'extérieur de l'espace d'impression (3),
• rentrée de l'arrangement d'accueil (4) dans l'espace d'impression (3), au moins un capteur optique (10) disposé dans le boîtier (2) détectant un marquage (11, 11') disposé sur l'objet d'impression (6) et/ou au moins un capteur optique (12) disposé dans le boîtier (2) détectant un marquage (13) disposé sur le chargeur (5),
• sélection d'un masque de saisie (17) parmi une pluralité de masques de saisie enregistrés dans la mémoire (8) par l'unité de commande et d'interprétation (7) à l'aide du marquage (11, 11') de l'objet d'impression (6) inséré détecté par le capteur (10) ou sélection de masques de saisie (17) individuels parmi la pluralité de masques de saisie enregistrés dans la mémoire (8) par l'unité de commande et d'interprétation (7) à l'aide du marquage (13) du chargeur (5) inséré détecté par le capteur (12),
• affichage du masque de saisie (17) sélectionné ou des masques de saisie (17) sélectionnés sur le dispositif de saisie et d'affichage (9).

2. Procédé selon la revendication 1, au moins un capteur optique (10) disposé dans le boîtier (2) détectant un marquage (11, 11') disposé sur l'objet d'impression (6) et au moins un capteur optique (12) disposé dans le boîtier (2) détectant un marquage (13) disposé sur le chargeur (5), **caractérisé par** les étapes suivantes :
• réalisation d'une comparaison du marquage (13) du chargeur (5) inséré détecté par l'au moins un capteur optique (12) avec un marquage enregistré dans la mémoire (8) pour un chargeur (5) autorisé pour l'objet d'impression (6) dans l'unité de commande et d'interprétation (7),
• émission d'un message d'erreur lorsque le marquage (13) du chargeur (5) inséré détecté par le capteur (12) ne coïncide pas avec le marquage pour un chargeur (5) autorisé enregistré dans la mémoire (8).

3. Procédé selon l'une des revendications 1 ou 2, **caractérisé par** les étapes suivantes :
• insertion d'une cassette d'imprimante (21) interchangeable dans le boîtier (2), un marquage (22) étant disposé au niveau de la cassette d'imprimante (21),
• détection du marquage (22) au niveau de la cassette d'imprimante (21) au moyen d'au moins un capteur optique (20) disposé dans le boîtier (2),
• réalisation d'une comparaison du marquage (22) de la cassette d'imprimante (21) insérée détecté par l'au moins un capteur optique (20) avec un marquage enregistré dans la mémoire (8) pour une cassette d'imprimante (21) autorisée pour l'objet d'impression (6) dans l'unité de commande et d'interprétation (7),
• émission d'un message d'erreur lorsque le marquage (22) de la cassette d'imprimante (21) insérée détecté par le capteur (20) ne coïncide pas avec le marquage pour une cassette d'imprimante (21) autorisée enregistré dans la mémoire (8).

4. Procédé selon la revendication 2 ou 3, **caractérisé en ce que** le masque de saisie (17) sélectionné ou les masques de saisie (17) sélectionnés ne sont affichés sur le dispositif de saisie et d'affichage (9) que si l'au moins une comparaison des marquages (11, 11', 13, 22) réalisée préalablement dans l'unité de commande et d'interprétation (7) n'a pas résulté en un écart.

5. Procédé selon l'une des revendications 2 à 4, **caractérisé en ce que** l'arrangement d'accueil (4) se déplace hors de l'espace d'impression (3) dans la position de chargement et de déchargement à l'extérieur de l'espace d'impression (3) lorsque le marquage (13) du chargeur (5) inséré détecté par le capteur (12) ne coïncide pas avec le marquage pour un chargeur (5) autorisé enregistré dans la mémoire (8).

6. Procédé selon l'une des revendications 1 à 5, **caractérisé en ce que** la rentrée de l'arrangement d'accueil (4) dans l'espace d'impression (3) est démarrée par une pression sur un bouton correspondant ou sur une touche (28).

7. Imprimante (1) destinée à mettre en œuvre le procédé selon l'une des revendications 1 à 6, comprenant un boîtier (2), comprenant un espace d'impression (3) formé à l'intérieur du boîtier (2), comprenant un arrangement d'impression, comprenant un arrangement d'accueil (4) pour un chargeur (5) interchangeable servant à accueillir l'objet d'impression (6) à imprimer, comprenant une unité de commande et d'interprétation (7) et comprenant une mémoire (8), l'arrangement d'accueil (4) pouvant être déplacé entre une position de chargement et de déchargement à l'extérieur de l'espace d'impression (3) et une position d'impression à l'intérieur de l'espace d'impression (3),
**caractérisée en ce**
**que** l'imprimante (1) possède en plus un dispositif de saisie et d'affichage (9) et
en ce qu'au moins un capteur optique (10) destiné à détecter un marquage (11, 11') disposé sur l'objet d'impression (6) et/ou au moins un capteur optique (12) destiné à détecter un marquage (13) disposé sur le chargeur (5) inséré dans l'arrangement d'accueil (4) se trouve dans le boîtier (2), et
en ce que l'unité de commande et d'interprétation (7) est configurée pour, à l'aide du marquage (11, 11') de l'objet d'impression (6) inséré détecté par le capteur (10), sélectionner le masque de saisie (17) approprié pour l'objet d'impression (6) inséré parmi une pluralité de masques de saisie enregistrés dans la mémoire (8) et/ou, à l'aide du marquage (13) du chargeur (5) inséré détecté par le capteur (12), sélectionner des masques de saisie (17) individuels parmi une pluralité de masques de saisie enregistrés dans la mémoire (8), le masque de saisie (17) sélectionné ou les masques de saisie (17) sélectionnés étant affichés sur le dispositif de saisie et d'affichage (9).

8. Imprimante (1) selon la revendication 7, **caractérisée en ce qu'**au moins un capteur optique (10) destiné à détecter le marquage (11, 11') disposé sur l'objet d'impression (6) et au moins un capteur optique (12) destiné à détecter le marquage (13) disposé sur le chargeur (5) se trouvent dans le boîtier (2), l'au moins un capteur optique (10) destiné à détecter le marquage (11, 11') disposé sur l'objet d'impression (6) et le capteur optique (12) destiné à détecter le marquage (13) disposé sur le chargeur (5) étant disposés l'un par rapport à l'autre de telle sorte que leurs axes optiques suivent un tracé sensiblement perpendiculaire l'un à l'autre.

9. Imprimante (1) selon la revendication 7 ou 8, **caractérisée en ce qu'**au moins un capteur optique (20) supplémentaire destiné à détecter un marquage (22) disposé sur une cassette d'imprimante (21) interchangeable se trouve dans le boîtier (2).

10. Imprimante (1) selon l'une des revendications 7 à 9, **caractérisée en ce que** les capteurs optiques (10, 12, 20) individuels sont réalisés sous la forme de capteurs de lumière réfléchie destinés à détecter respectivement un marquage à code à barres (11, 11', 13, 22).
